# EUROPÄISCHE PATENTSCHRIFT

(11) **EP 0 887 429 B1**
(45) Veröffentlichungstag und Bekanntmachung des Hinweises auf die Patenterteilung: **31.05.2000**
(21) Anmeldenummer: 98107780.3
(22) Anmeldetag: 29.04.1998
(51) Int. Cl.: C22B 43/00, C22B 7/00, H01M 6/52, F23G 7/00, F23G 5/14, C10B 53/00, B01D 53/64, F27B 5/04, B01D 5/00, A62D 3/00

(54) **Verfahren und Vorrichtung zum Aufarbeiten von Stoffgemischen, die Schwermetalle oder halogenierte Kohlenwasserstoffe enthalten, durch thermisches Verdampfen in Vakuum**
Process and apparatus for treating heavy metals and halogenated hydrocarbons containing materials by thermal evaporation in vacuum
Procédé et dispositif pour le retraitement de matériaux comprenant des métaux lourds et des hydrocarbures halogénés par évaporation thermique sous vide

(30) Priorität: 28.06.1997 DE 19727565
(43) Veröffentlichungstag der Anmeldung: 30.12.1998
(73) Patentinhaber: ALD Vacuum Technologies AG, 63450 Hanau (DE)
(72) Erfinder: Wanetzky, Erwin, 63538 Grosskrotzenburg (DE); Melber, Albrecht, Dr., 64287 Darmstadt (DE); Hugo, Franz, 63743 Aschaffenburg (DE)

(56) Entgegenhaltungen:
- EP-A- 0 186 641
- DE-A- 2 700 833
- DE-A- 2 911 994
- DE-A- 3 243 813
- DE-A- 19 547 151
- GB-A- 1 524 464

## Beschreibung

Die vorliegende Erfindung betrifft ein Verfahren zum Aufarbeiten von Stoffgemischen, die Schwermetalle oder halogenierte Kohlenwasserstoffe enthalten mit mindestens 2 Phasen unterschiedlicher Siedetemperatur durch thermisches Verdampfen im Vakuum, wobei das Stoffgemisch unter stufenweiser Erhöhung der Temperatur in einer Behandlungskammer verdampft, die Verdampfungsprodukte abgesaugt werden und nach Rückkühlung getrennt nach Phasen kondensieren.

Derartige Verfahren kommen vorwiegend bei Stoffgemischen zum Einsatz, die gesundheitsschädliche Wirkung haben und deshalb entsorgt werden müssen. Bekannte Beispiele sind die Entsorgung von Quecksilberbatterien, die aus einem Metallgehäuse, einem Elektrolyten mit Elektrolytwasser und Schwermetall oder Schwermetallverbindungen wie Hg sowie Dichtungsmaterialien und Umhüllungen aus Kunststoff bestehen sowie Metallschrotte, die mit Wasser und PCB-haltigen Ölen kontaminiert sind. Derartige inhomogene Stoffgemische lassen sich nur schwierig in ihre einzelnen Komponenten zerlegen.

Thermische Verfahren im Vakuum machen von der physikalischen Gesetzmäßigkeit Gebrauch, daß die Siedetemperatur aller organischen und anorganischen Verbindungen mit sinkendem Druck abnimmt. Wasser beginnt bekanntermaßen unter einem Druck von 30 mbar bereits bei 25°C zu sieden. Wird nun ein Stoffgemisch unter stufenweiser Erhöhung der Temperatur im Vakuum verdampft, verflüchtigen sich zunächst die leicht flüchtigen Komponenten während die hochmolekularen Feststoffe in den Resten des Stoffgemisches zurückbleiben. Kunststoffe, Gummi oder Lacke verkoken dabei zu Kohlenstoff. Bei Temperaturen um 300°C können unter Vakuumbedingungen auch Schwermetalle wie Hg verdampfen und in einem geschlossenen Kondensationssystem zurückgewonnen werden.

Durch die DE 32 43 813 C2 ist es bekannt, quecksilberhaltige Batterien dadurch aufzuarbeiten, daß man die Batterien in einem ersten Verfahrensschritt bei einem Druck von 0,95 bar unter Spülung mit einem Inertgas auf 200°C erhitzt und dabei öffnet und in den Batterien als Dichtungsmaterial enthaltene Kunststoffkomponenten teilweise zersetzt. Die dabei entstehenden Dämpfe, in denen sich auch ein Teil des Quecksilbers befindet, werden unter Zufuhr von Luft und Verbrennungsgas in einen Nachbrenner geleitet, in dem die Zerfallsprodukte des Kunststoffs bei Temperaturen zwischen 1500 und 2000°C verbrannt werden. Die Abgase des Nachbrenners werden in ein Kühlgefäß geleitet, in dem das Quecksilber kondensiert wird. In einem zweiten Verfahrensschritt werden die Batteriereste auf 415°C aufgeheizt, wobei die restlichen Kunststoffkomponenten zersetzt und deren Zersetzungsprodukte gleichfalls mit einem weiteren Anteil des Quecksilbers durch den Nachbrenner geleitet werden. Das Quecksilber wird gleichfalls im Kühlgefäß kondensiert. In einem dritten Verfahrensschritt werden die Batteriereste auf 510°C aufgeheizt und durch einen zwischen 0,5 und 0,05 bar pulsierenden Druck werden die restlichen Quecksilberanteile ausgetrieben. Aus dem Kühlgefäß austretende Quecksilberanteile werden schließlich in einer besonderen Kältefalle aufgefangen.

In der EP 0 186 641 wird eine beheizte Brennkammer beschrieben, die als Nachbrenner in die von der Behandlungskammer kommenden Abgasleitung eingebaut ist. Die Abgase werden in einer Labyrinthkonstruktion unter Zufuhr von O₂ bis auf max. 1100°C erhitzt, so daß alle organischen Komponenten unter Bildung von H₂O und CO₂ verbrennen.

Bei beiden Verfahren ist die Nachbrennkammer in die Abgasleitung der Behandlungskammer eingebaut. Neben dem Platzbedarf ist vor allem die ungünstige Energiebilanz von Nachteil, da die thermische Abstrahlung des Nachbrenners durch Isolation begrenzt oder durch direkte Kühlung vernichtet werden muß.

Weiterhin sind an das Material des Nachbrenners hohe Anforderungen gestellt, da es aufgrund der prozeßbedingten Druck- und Temperaturwechsel starken mechanischen Belastungen ausgesetzt ist.

Demgegenüber liegt dieser Erfindung die Aufgabe zugrunde, ein Verfahren der eingangs beschriebenen Gattung anzugeben, durch das die Komponenten von Stoffgemischen, die Schwermetalle oder halogenierte Kohlenwasserstoffe enthalten, kostengünstiger und energiesparender getrennt werden können.

Weiterhin soll die Zuverlässigkeit und Lebensdauer des Nachbrenners verbessert werden.

Die Lösung der gestellten Aufgabe erfolgt erfindungsgemäß dadurch, daß
a) die in der Behandlungskammer erzeugten Verdampfungsprodukte einem Reaktionsraum zugeführt werden, der Teil der Behandlungskammer ist und mit ihr in Wirkverbindung steht;
b) dem Reaktionsraum ein Reaktionsgas oder Reaktionsgasgemisch unabhängig von den Verdampfungsprodukten der Behandlungskammer zugeführt wird;
c) die Saugleitung zum Abpumpen der Verdampfungsprodukte und Reaktionsgase an den Reaktionsraum angeschlossen ist.

Eine Anlage zur Durchführung des erfindungsgemäßen Verfahrens ist in Anspruch 7 definiert.

Durch diese erfindungsgemäßen Maßnahmen lassen sich Stoffgemische der angesprochenen Art mit wesentlich günstigerer Energiebilanz trennen. Die Energie zum Aufheizen der Reaktionskammer wird fast vollständig innerhalb der Behandlungskammer umgesetzt, da die Abstrahlungsenergie für den Aufheizprozeß des Stoffgemisches in der Behandlungskammer genutzt werden kann. Ein weiterer Vorteil der raumsparenden Anordnung von Reaktion- und Behandlungskammer liegt darin, daß die beiden Heizkreise für Behandlungskammer und Reaktionskammer über die jeweiligen Wärmeflüsse sich ergänzen. Findet z. B. in dem Reaktionsraum aufgrund hoher Kohlenwasserstoff- und geringer Wasserdampfkonzentration eine exotherme Reaktion statt, so kann die freiwerdende Energie dieser Reaktion für die Heizung des Reaktionsraumes oder gar des Behandlungsraumes verwandt werden.

Insbesondere wirkt sich aber die Anordnung des Reaktionsraumes in der evakuierten Behandlungskammer auch auf die mechanische Beanspruchung und Lebensdauer des thermisch stark belasteten Reaktionsraumes aus, da auf der Kammerwand des Reaktionsraumes kein Atmosphärendruck mehr lastet.

Die Erfindung wird anhand der beigefügten Zeichnung näher erläutert:

Die Zeichnung zeigt ein Verfahrensschema zum Wiedergewinnen von Quecksilber aus Quecksilberbatterien.

Die Zeichnung ist eine beheizbare Behandlungskammer mit einem Vakuumkessel 2, Tür 5 und Chargeneinsatz 7 dargestellt. Der Vakuumkessel 2 ist von einer Heizung 3 mit Temperaturmessung 10 und einer Wärmeisolation 4 versehen. Die Tür 5 weist Dichtungen auf, die von einem Versorgungssystem 49 über Leitungen 50, 50' mit Thermoöl von max. 250°C gekühlt werden. Temperatur- und Druckmessungen zur Steuerung des Prozesses in der Behandlungskammer erfolgen über die Meßstellen 9, 10 und 11. Nach Prozeßende wird der Vakuumkessel 2 über die Kühlleitung 13 mit einem Gebläse 14 herunter gekühlt. Die Kühlluft entweicht über das Auslaßventil 16 und die Leitung 15. Der Reaktionsraum 8 wird über die Öffnung 17 in den Vakuumkessel 2 eingebaut. Der Reaktionsraum 8 besteht in dieser Ausgestaltung aus einem glatten Rohr aus hochwarmfestem Stahl, das durch direkten Stromdurchgang geheizt werden kann. Es ragt mit offenem Anfang in den Behandlungsraum hinein und ist absaugseitig über Kompensatoren 18 und 19 an den Kondensator K1 angeschlossen. Die Kompensatoren 18 und 19 sorgen für eine spannungsfreie Längsausdehnung im vorgegebenen Temperaturbereich Gleichzeitig dient der mittige Flansch zwischen den Kompensatoren als Anschlußstelle 36 für den nicht gezeigten Heizungsanschluß und eine Kühlleitung 35 mit Absperrventil 34 für den Einlaß von N₂ nach Prozeßende. Die Temperatur im Reaktionsraum 8 wird mit der Meßstelle 12 gemessen. Die Zufuhr von O₂ erfolgt über die Leitung 48 und das Einlaßventil 47. Mit Hilfe der Lambda-Sonde 46, die den prozentualen O₂-Anteil in der Abluftleitung 45 mißt, kann über eine nicht gezeigte Regelstrecke die O₂-Zufuhr zum Reaktionsraum 8 prozeßbedingt geregelt werden.

Die Reaktionsprodukte aus H₂O und Hg kondensieren im Kondensator K1 mit Kondensatflächen 20 und werden über das Absperrventil 23 im Sammelbehälter 24 aufgefangen, der wiederum über das Ablaufventil 25 entleert wird.

Am Sammelbehälter sind Belüftungsventil 26 und ein Absperrventil 27 zum Anschluß einer pH-Wert-Meßeinrichtung 28 vorgesehen.

Im Kondensator K1 kann über die Leitung 21 und das Absperrventil 22' Lauge zugegeben werden, um saure pH-Werte der Kondensatflüssigkeit zu neutralisieren.

Gasförmige Reaktionskomponenten, vor allem CO₂ werden über die Leitung 37 und das Absperrventil 38 mit Hilfe des Vakuumpumpstandes 39 abgesaugt.

Der Vakuumpumpstand wird nicht im einzelnen beschrieben, er enthält hintereinander geschaltete Rootspumpen, einen Gasstrahler und eine Wasserringpumpe.

Aus dem Umlaufbehälter 40 wird einerseits H₂O über den Rückkühler K2 mit Kühlfläche 41 und Ablaßventil 42 über die Leitung 43 zu der Wasserringpumpe zurückgeführt, andererseits Trockengas über die Leitung 44 dem Gasstrahler zugeführt. Die Trockengase entweichen über die Abluftleitung 45 zur weiteren Verwendung.

### Beispiel I (Quecksilberbatterien):

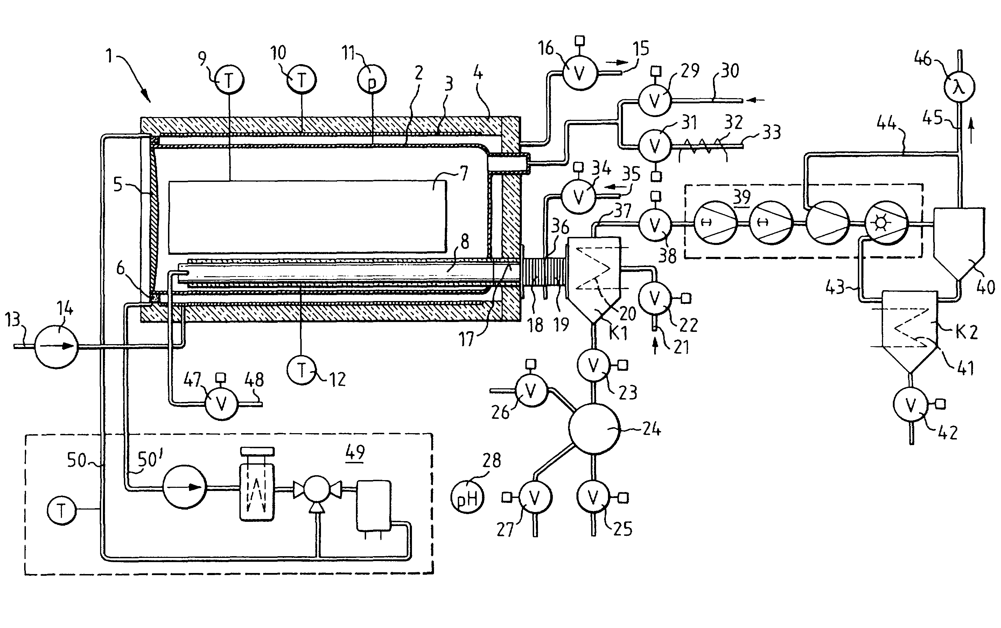

In einer Anlage nach Figur 1 mit einem Volumen der Vakuumkammer von 6 m³ wurden 3000 kg unzerkleinerte Altbatterien mit einem Quecksilberanteil von 15 kg und einem Elektrolytwasseranteil von 480 kg in der Vakuumkammer untergebracht und diese zunächst auf 23 mbar evakuiert. Anschließend wurden ein Druck von 42,4 mbar und eine Temperatur von 40°C eingestellt. Hierbei verdampfte das Wasser, nicht aber das Quecksilber. In etwa 480 Minuten wurden im Kondensator K1 478 kg Wasser kondensiert und in den Sammelbehälter 24 übergeleitet. Hierbei wurde die Temperatur des Stoffgemischs durch entsprechend geregelte Beheizung konstant gehalten. Die Batterien gingen beim Wasserausdampfen von allein auf. Bei Beendigung der Wasserverdampfung begann im verbliebenen Stoffgemisch die Temperatur anzusteigen. Dieser Vorgang wurde durch den in der Mitte des Stoffgemischs angeordneten Temperaturfühler 9 erfaßt, worauf eine nicht gezeigte Steuereinheit das Absperrventil 23 schloß. Anschließend wurde der Druck auf 30 mbar abgesenkt und die Temperatur durch die Heizeinrichtung innerhalb von 240 Minuten auf 380°C gesteigert, wodurch alle Kohlenwasserstoffe entgasen und das Quecksilber nach und nach verdampft und gleichfalls im Kondensator K1 kondensiert. Nach 90 Minuten weiterer Heizung bei 380 °C und Druckabsenkung auf 10⁻² mbar war nur noch eine Trockenmasse von 2451 kg mit einem restlichen Quecksilbergehalt von 1,7 mg pro kg Trockenmasse vorhanden, die mechanisch zerkleinert wurde. Die Eisenanteile wurden mit einem Magnetabscheider aussortiert und normalem Stahlschrott in einem Stahlwerk zugegeben. Das vorhandene Mangandioxid und der Zinkstaub wurden in einer Zinkhütte aufgearbeitet.

### Bezugszeichenliste

- 1: Behandlungskammer
- 2: Vakuumkessel
- 3: Heizung
- 4: Isolation
- 5: Tür
- 6: Türdichtung
- 7: Chargeneinsatz
- 8: Reaktionsraum
- 9: Temperaturmessung Charge
- 10: Temperaturmessung Heizung
- 11: Druckmessung
- 12: Temperaturmessung Oxidationsrohr
- 13: Kühlgasleitung
- 14: Gebläse
- 15: Kühlgasauslaß
- 16: Kühlgasabsperrventil
- 17: Vakuumdurchführung
- 18: Kompensator 1
- 19: Kompensator 2
- 20: Kondensationsfläche
- 21: Zuleitung
- 22: Absperrventil
- 23: Absperrventil
- 24: Sammelbehälter
- 25: Ablaßventil
- 26: Belüftungsventil
- 27: Absperrventil pH-Messung
- 28: pH-Messung
- 29: Einlaßventil
- 30: O₂-Zuleitung
- 31: Absperrventil
- 32: Heizung
- 33: Meßleitung
- 34: Einlaßventil
- 35: N₂-Zuleitung
- 36: Zuführungsflansch
- 37: Vakuumsaugleitung
- 38: Absperrventil Saugleitung
- 39: Vakuumpumpstand
- 40: Umlaufbehälter
- 41: Kondensatfläche
- 42: Ablaßventil
- 43: Umlaufleitung
- 44: Umwegleitung
- 45: Abzugleitung
- 46: Lambda-Sonde
- 47: Einlaßventil
- 48: O₂-Zuleitung
- 49: Thermoölversorgungssystem
- 50, 50': Thermoölleitungen
- K1: Kondensator 1
- K2: Kondensator 2

## Patentansprüche

1. Verfahren zum Aufarbeiten von Stoffgemischen, die Schwermetalle oder halogenierte Kohlenwasserstoffe enthalten mit mindestens 2 Phasen unterschiedlicher Siedetemperatur durch thermisches Verdampfen im Vakuum, wobei das Stoffgemisch (7) unter stufenweiser Erhöhung der Temperatur in einer Behandlungskammer (1) verdampft, die Verdampfungsprodukte abgesaugt werden und nach Rückkühlung getrennt nach Phasen kondensieren, **dadurch gekennzeichnet,** daß
a) die in der Behandlungskammer erzeugten Verdampfungsprodukte einem Reaktionsraum (8) zugeführt werden, der Teil der Behandlungskammer ist und mit ihr in Wirkverbindung steht;
b) dem Reaktionsraum ein Reaktionsgas oder Reaktionsgasgemisch (48) unabhängig von den Verdampfungsprodukten der Behandlungskammer zugeführt wird;
c) die Saugleitung (37) zum Abpumpen der Verdampfungsprodukte und Reaktionsgase an den Reaktionsraum angeschlossen ist.

2. Verfahren nach Anspruch 1, **dadurch gekennzeichnet,** daß die Temperatur des Reaktionsraumes in Abhängigkeit vom thermischen Gleichgewicht der Reaktionen gesteuert wird.

3. Verfahren nach Anspruch 1 und 2, **dadurch gekennzeichnet,** daß der Reaktionsraum auf eine Temperatur bis 1050°C aufgeheizt wird.

4. Verfahren nach mindestens einem der Ansprüche 1 bis 3, **dadurch gekennzeichnet,** daß das zugeführte Reaktionsgas O₂ oder ein O₂-Gemisch ist.

5. Verfahren nach mindestens einem der Ansprüche 1 bis 4, **dadurch gekennzeichnet,** daß die Zufuhr des Reaktionsgases in Abhängigkeit von einer Messung des Abgases (45) geregelt wird.

6. Verfahren nach mindestens einem der Ansprüche 1 bis 5, **dadurch gekennzeichnet,** daß der O₂-Gehalt im Abgas mit einer Lambda-Sonde (46) gemessen wird.

7. Vorrichtung zur Durchführung des Verfahrens nach mindestens einem der Ansprüche 1 bis 6, umfassend eine beheizbare Behandlungskammer (1) mit einem Vakuumkessel (2), eine Vakuumabsaugung (37, 39), eine Heizung (3), eine Wärmeisolation (4) und ein Reaktionsraum (8), **dadurch gekennzeichnet,** daß der Reaktionsraum (8) als glattes Rohr ausgeführt ist, das sich auf der einen Seite offen in den Behandlungsraum des Vakuumkessels (2) erstreckt und auf der anderen Seite (17) vakuumdicht durch die Kammerwand geführt ist und mit der Absaugleitung (37) verbunden ist.

8. Vorrichtung nach Anspruch 7, dadurch gekennzeichnet. daß das Rohr aus hochfestem Stahl durch direkten Stromdurchgang beheizt wird.

9. Vorrichtung nach Anspruch 8, dadurch gekennzeichnet, daß das Rohr an seiner Saugseite (17) mit Kompensatoren (18, 19) ausgerüstet ist, die der thermischen Ausdehnung Rechnung tragen.

10. Vorrichtung nach den Ansprüchen 7 bis 9, dadurch gekennzeichnet, daß das Rohr thermisch isoliert ist.

11. Vorrichtung nach den Ansprüchen 7 bis 10, dadurch gekennzeichnet, daß das Rohr im wesentlichen horizontal verläuft.

## Claims

1. Process for treating mixtures of materials containing heavy metals or halogenated hydrocarbons with at least 2 phases of different boiling temperature by thermal evaporation in a vacuum, in which the mixture of materials (7) is evaporated with step-wise raising of the temperature in a treatment chamber (1), the evaporation products are exhausted and after cooling condense separately by phases, characterised in that
a) the evaporation products generated in the treatment chamber are fed to a reaction area (8) which forms part of the treatment chamber and is connected actively to it;
b) a reaction gas or reaction gas mixture (48) is fed to the reaction area independently of the evaporation products of the treatment chamber;
c) the suction line (37) for the pumping off of the evaporation products and reaction gases is connected to the reaction area.

2. Process according to claim 1, characterised in that the temperature of the reaction area is controlled as a function of the thermal equilibrium of the reactions.

3. Process according to claims 1 and 2, characterised in that the reaction area is heated up to a temperature of up to 1050°C.

4. Process according to at least one of claims 1 to 3, characterised in that the reaction gas fed is O₂ or an O₂ mixture.

5. Process according to at least one of claims 1 to 4, characterised in that the feeding of the reaction gas is regulated as a function of a measurement of the exit gas (45) .

6. Process according to at least one of claims 1 to 5, characterised in that the O₂ content in the exit gas is measured with a lambda probe (46).

7. Apparatus for carrying out the process according to at least one of claims 1 to 6, comprising a heated treatment chamber (1) with a vacuum vessel (2), a vacuum suction system (37, 39), a heater (3), a thermal insulation (4) and a reaction area (8), characterised in that the reaction area (8) is constructed as a smooth pipe which on the one side extends open into the treatment area of the vacuum vessel (2) and on the other side (17) is run vacuum-tight through the chamber wall and is connected to the suction line (37).

8. Apparatus according to claim 7, characterised in that the pipe of high-strength steel is heated by direct passage of current.

9. Apparatus according to claim 8, characterised in that the pipe is fitted on its suction side (17) with compensators (18, 19) which take account of the thermal expansion.

10. Apparatus according to claims 7 to 9, characterised in that the pipe is thermally insulated.

11. Apparatus according to claims 7 to 10, characterised in that the pipe runs substantially horizontally.

## Revendications

1. Procédé de retraitement de mélanges de matériaux qui contiennent des métaux lourds ou des hydrocarbures halogénés avec au moins deux phases de températures d'ébullition différentes par évaporation thermique sous vide, où le mélange de matériaux (7) est évaporé dans une chambre de traitement (1) avec augmentation par pas de la température, les produits d'évaporation sont aspirés et se condensent séparément selon les phases après refroidissement, caractérisé en ce que
a) les produits d'évaporation formés dans la chambre de traitement sont envoyés dans une enceinte réactionnelle (8) qui fait partie de la chambre de traitement et qui est en communication active avec elle ;
b) un gaz réactionnel ou un mélange de gaz réactionnels (48) est envoyé dans l'enceinte réactionnelle indépendamment des produits d'évaporation de la chambre de traitement ;
c) la conduite d'aspiration (37) pour le pompage des produits d'évaporation et des gaz réactionnels est raccordée à l'enceinte réactionnelle.

2. Procédé selon la revendication 1, caractérisé en ce que la température de l'enceinte réactionnelle est commandée en fonction de l'équilibre thermique des réactions.

3. Procédé selon les revendications 1 et 2, caractérisé en ce que l'enceinte réactionnelle est chauffée à une température pouvant atteindre 1 050°C.

4. Procédé selon au moins l'une des revendications 1 à 3, caractérisé en ce que le gaz réactionnel introduit est O₂ ou un mélange contenant O₂.

5. Procédé selon au moins l'une des revendications 1 à 4, caractérisé en ce que l'introduction du gaz réactionnel est régulée en fonction d'une mesure du gaz usé (45).

6. Procédé selon au moins l'une des revendications 1 à 5, caractérisé en ce que la teneur en O₂ du gaz usé est mesurée avec une sonde lambda (46).

7. Dispositif pour la mise en oeuvre du procédé selon au moins l'une des revendications 1 à 6 comportant une chambre de traitement chauffable (1) avec un bassin à vide (2), une aspiration à vide (37, 39), un chauffage (3), une isolation thermique (4) et une enceinte réactionnelle (8), caractérisé en ce que l'enceinte réactionnelle (8) est sous forme d'un tube lisse qui, d'un côté, s'étend, ouvert, dans l'enceinte de traitement du bassin à vide (2) et qui est enfilé de l'autre côté (17) de manière étanche au vide à travers la paroi de la chambre et qui est relié à la conduite d'aspiration (37).

8. Dispositif selon la revendication 7, caractérisé en ce que le tube en acier à haute résistance est chauffé par passage direct de courant.

9. Dispositif selon la revendication 8, caractérisé en ce que le tube est muni au niveau de son côté aspiration (17) de compensateurs (18, 19) qui tiennent compte de la dilatation thermique.

10. Dispositif selon les revendications 7 à 9, caractérisé en ce que le tube est isolé thermiquement.

11. Dispositif selon les revendications 7 à 10, caractérisé en ce que le tube s'étend sensiblement horizontalement.
